(19) **Europäisches Patentamt**
**European Patent Office**
**Office européen des brevets**

(11) **EP 4 693 496 A1**

(12) **EUROPEAN PATENT APPLICATION**
published in accordance with Art. 153(4) EPC

(43) Date of publication:
**11.02.2026 Bulletin 2026/07**

(21) Application number: **24882847.7**

(22) Date of filing: **24.10.2024**

(51) International Patent Classification (IPC):
$H01M\ 4/525^{(2010.01)}$      $H01M\ 4/505^{(2010.01)}$
$H01M\ 4/36^{(2006.01)}$      $H01M\ 10/052^{(2010.01)}$
$H01M\ 4/02^{(2006.01)}$

(52) Cooperative Patent Classification (CPC):
**H01M 4/02; H01M 4/36; H01M 4/505; H01M 4/525;
H01M 10/052; Y02E 60/10**

(86) International application number:
**PCT/KR2024/016269**

(87) International publication number:
**WO 2025/089820 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.10.2023 KR 20230143953
22.10.2024 KR 20240144708**

(71) Applicant: **ECOPRO BM CO., LTD.**
**Cheongju-si, Chungcheongbuk-do 28116 (KR)**

(72) Inventors:
• **SON, Yu Jin**
**Cheongju-si, Chungcheongbuk-do 28116 (KR)**
• **PARK, Jung Bae**
**Cheongju-si, Chungcheongbuk-do 28116 (KR)**

• **CHOI, Woo Seok**
**Cheongju-si, Chungcheongbuk-do 28116 (KR)**
• **PARK, Jung Gyu**
**Cheongju-si, Chungcheongbuk-do 28116 (KR)**
• **SHIN, Yo Seop**
**Cheongju-si, Chungcheongbuk-do 28116 (KR)**
• **KIM, Seok Jo**
**Cheongju-si, Chungcheongbuk-do 28116 (KR)**
• **HEO, Jun Hee**
**Cheongju-si, Chungcheongbuk-do 28116 (KR)**
• **LEE, Sang Don**
**Cheongju-si, Chungcheongbuk-do 28116 (KR)**
• **HWANG, Do Young**
**Cheongju-si, Chungcheongbuk-do 28116 (KR)**

(74) Representative: **BCKIP Part mbB**
**MK1**
**Landsbergerstraße 98, 3.Stock**
**80339 München (DE)**

(54) **CATHODE ACTIVE MATERIAL AND LITHIUM SECONDARY BATTERY COMPRISING SAME**

(57)      The present invention relates to a positive electrode active material and a lithium secondary battery comprising the same. More specifically, the present invention relates to a positive electrode active material comprising a lithium transition metal oxide of a Mid-Ni type having a relatively low nickel content, in which the content of fine powder in the positive electrode active material is controlled and the particle size distribution of the lithium transition metal oxide included in the positive electrode active material is adjusted, thereby improving capacity and lifetime characteristics and providing enhanced operational properties at high voltage.

FIG. 1

EP 4 693 496 A1

**Description**

BACKGROUND

**1. Field of the Invention**

The present invention relates to a positive electrode active material and a lithium secondary battery comprising the same. More specifically, the present invention relates to a positive electrode active material comprising a lithium transition metal oxide of a Mid-Ni type having a relatively low nickel content, in which the content of fine powder in the positive electrode active material is controlled and the particle size distribution of the lithium transition metal oxide included in the positive electrode active material is adjusted, thereby improving capacity and lifetime characteristics and providing enhanced operational properties at high voltage.

**2. Discussion of Related Art**

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

A lithium transition metal oxide is used as a positive electrode active material for a lithium secondary battery, and as an example, composite oxides such as $LiCoO_2$, $LiMn_2O_4$, $LiNiO_2$, $LiMnO_2$, and the like are being studied.

Among the positive electrode active materials, $LiCoO_2$ is the most widely used due to its excellent lifetime characteristics and charge/discharge efficiency, but it has limitations in price competitiveness because cobalt, which is used as a raw material, is expensive due to resource constraints.

Lithium manganese oxides such as $LiMnO_2$ and $LiMn_2O_4$ have advantages of excellent thermal safety and low price, but also have problems of low capacity and poor high-temperature characteristics. In addition, a $LiNiO_2$-based positive electrode active material exhibits battery characteristics such as high discharge capacity, but it is difficult to synthesize the $LiNiO_2$-based positive electrode active material due to cation mixing between Li and transition metals, thereby causing significant problems in rate characteristics.

Therefore, in order to improve the low rate and cycle characteristics of $LiNiO_2$ while maintaining its high reversible capacity, ternary lithium transition metal oxides such as the so-called NCM (Ni-Co-Mn) and NCA (Ni-Co-Al), in which part of the nickel is substituted with cobalt, manganese, and/or aluminum, or quaternary lithium transition metal oxides such as NCMA (Ni-Co-Mn-Al) have been developed. Since the reversible capacity is reduced as the nickel content in the ternary or quaternary lithium transition metal oxide decreases, research has been widely conducted to increase the nickel content in the lithium transition metal oxide.

However, as the content of nickel in the lithium transition metal oxide increases, cation mixing increases in the crystal structure, thereby reducing stability or increasing the content of unreacted lithium impurities such as LiOH and $Li_2CO_3$ on the surface.

As the content of lithium impurities remaining on the surface of the lithium transition metal oxide increases, gas generation and swelling may be promoted in a lithium secondary battery using the lithium transition metal oxide as a positive electrode active material. As the content of lithium impurities remaining on the surface of the lithium transition metal oxide increases, a paste composition becomes gel-like due to lithium impurities when a paste for forming a positive electrode active material layer is prepared using the lithium transition metal oxide.

Accordingly, a washing process needs to be performed in the manufacturing process of the positive electrode active material to remove lithium impurities remaining on the surface of the lithium transition metal oxide. However, as the surface of the lithium transition metal oxide is damaged through this washing process, the electrochemical properties and stability of the lithium secondary battery using the lithium transition metal oxide as a positive electrode active material are degraded, and in particular, the problem of premature degradation of lifetime may occur.

In addition, as the demand for lithium secondary batteries has recently grown rapidly and the cost of raw materials has also increased, the lithium secondary battery market has faced a strong demand for cost reduction. In particular, the positive electrode active material accounts for the largest proportion of the material cost in lithium secondary batteries, and the cost of the positive electrode active material inevitably increases as the nickel content, which is an essential element of ternary or quaternary lithium transition metal oxides, increases.

That is, although an increase in the nickel content in the positive electrode active material improves reversible capacity, it also causes problems such as an increase in lithium impurities in the positive electrode active material and a rise in the cost of the positive electrode active material, resulting in a trade-off relationship.

Accordingly, there is a need to develop a Mid-Ni type positive electrode active material capable of solving problems such as a decrease in electrochemical characteristics caused by reducing the nickel content in the positive electrode active material, while achieving the goals of improving stability and reducing cost by lowering the nickel content in the positive electrode active material.

SUMMARY OF THE INVENTION

In the lithium secondary battery market, the growth of lithium secondary batteries for electric vehicles has been playing a leading role, and accordingly, the demand for positive electrode active materials used in lithium secondary batteries has also been continuously increasing.

For example, conventionally, lithium secondary batteries using lithium iron phosphate (LFP) have mainly been used from the perspective of ensuring safety; however, recently, the use of nickel-based lithium transition metal oxides, which have higher energy capacity per weight compared to LFP, has been expanding (although relatively inexpensive LFP is still used to reduce costs in some cases).

In addition, nickel-based lithium transition metal oxides, which are mainly used as positive electrode active materials for high-capacity lithium secondary batteries, typically have a ternary composition such as NCM (Ni-Co-Mn) or NCA (Ni-Co-Al) containing about 70 to 80 mol% or more of nickel, or a quaternary composition such as NCMA (Ni-Co-Mn-Al).

However, as described above, although increasing the nickel content in the lithium transition metal oxide improves reversible capacity, it can also cause problems such as an increase in lithium impurities in the positive electrode active material and deterioration of the stability of the positive electrode active material. Moreover, this inevitably leads to a trade-off problem, such as an increase in the cost of the positive electrode active material.

On the other hand, when the nickel content in the lithium transition metal oxide is reduced to achieve the goal of reducing the cost of the positive electrode active material, problems such as a decrease in electrochemical characteristics, including capacity and rate capability (discharge capacity retention), may occur.

Accordingly, an object of the present invention is to provide a positive electrode active material comprising a Mid-Ni type lithium transition metal oxide having a relatively low nickel content (for example, about 70 mol% or less or about 65 mol% or less), wherein the number of unit particles constituting the lithium transition metal oxide is reduced to improve lifetime characteristics and stability.

Another object of the present invention is to provide a positive electrode active material capable of exhibiting enhanced operational characteristics at high voltage by controlling the content of fine powder in the positive electrode active material through a pulverization process and adjusting the particle size distribution of the lithium transition metal oxide included in the positive electrode active material.

Still another object of the present invention is to provide a lithium secondary battery comprising the positive electrode active material defined herein.

The objects of the present invention are not limited to those mentioned above, and other objects and advantages of the present invention that are not described can be understood from the following description and will be more clearly understood by the embodiments of the present invention. It will also be readily apparent that the objects and advantages of the present invention can be realized by means and combinations thereof as defined in the claims.

According to one aspect of the present invention, there is provided a positive electrode active material comprising a lithium transition metal oxide capable of intercalation/deintercalation of lithium, wherein the content of fine powder in the positive electrode active material is controlled and the particle size distribution of the lithium transition metal oxide included in the positive electrode active material is adjusted, thereby improving capacity and lifetime characteristics and enabling enhanced operational characteristics at high voltage.

The lithium transition metal oxide comprises at least lithium and a transition metal, and a content of nickel among the transition metal may be 40 mol% or more and 70 mol% or less, 45 mol% or more and 70 mol% or less, 50 mol% or more and 70 mol% or less, 55 mol% or more and 65 mol% or less, or 60 mol% or more and 65 mol% or less.

A content of cobalt among the transition metal may be 10 mol% or less, 2.5 mol% or more and 10 mol% or less, or 5 mol% or more and 10 mol% or less. A content of manganese among the transition metal may be 20 mol% or more and 50 mol% or less, 20 mol% or more and 45 mol% or less, 20 mol% or more and 40 mol% or less, 25 mol% or more and 35 mol% or less, or 27 mol% or more and 33 mol% or less.

In addition, the lithium transition metal oxide further comprises cobalt and manganese as transition metals, and a content of manganese in the lithium transition metal oxide may be greater than a content of cobalt.

The lithium transition metal oxide may have a composition represented by Chemical Formula 1 below,

[Chemical Formula 1]     $Li_aNi_{1-(b+c+d)}Co_bMn_cM1_dO_2$

wherein, in Chemical Formula 1,

M1 is at least one selected from Na, K, Mg, Ca, Sr, Ba, Rb, B, Ce, Hf, Ta, Cr, F, Al, V, Ti, Fe, Zr, Zn, Si, Y, Nb, Ga, Sn, Mo, W, P, Ge, Nd, Gd, and Cu, and

$0.95 \leq a \leq 1.15$, $0 \leq b \leq 0.10$, $0.20 \leq c \leq 0.50$, $0 \leq d \leq 0.10$, and $0.4 \leq 1 - (b + c + d) \leq 0.7$.

As defined herein, in a Mid-Ni type lithium transition metal oxide having a relatively low nickel content, as the content of manganese becomes higher than the content of cobalt, kinetic characteristics such as lithium ion conductivity decrease, and there is a tendency for rate capability to deteriorate.

Accordingly, in order to improve the efficiency of reversible intercalation/deintercalation of lithium ions by the lithium transition metal oxide, and to thereby improve electrochemical characteristics that are relatively insufficient compared to a high-Ni type lithium transition metal oxide having a relatively high nickel content, the lithium transition metal oxide is characterized by having at least one form selected from a form of a single particle consisting of a single unit particle and a form of a quasi-single particle consisting of 30 or less unit particles aggregated.

An average particle diameter ($D_{50}$) of the lithium transition metal oxide present in the form of a single particle is 0.5 $\mu$m or more and 10.0 $\mu$m or less, and an average particle diameter ($D_{50}$) of the lithium transition metal oxide present in the form of a quasi-single particle may be 3.0 $\mu$m or more and 15.0 $\mu$m or less. The average particle diameter ($D_{50}$) of the lithium transition metal oxide present in the form of a quasi-single particle may vary depending on the number and size of unit particles constituting the quasi-single particle. In addition, each unit particle constituting the quasi-single particle may have a size comparable to that of the lithium transition metal oxide present in the form of a single particle. That is, the average particle diameter ($D_{50}$) of the unit particles constituting the quasi-single particle may be 0.5 $\mu$m or more and 10.0 $\mu$m or less.

A particle size distribution of the lithium transition metal oxide included in the positive electrode active material satisfies Equation 1 below:

$$[\text{Equation 1}]$$

$$0.85 \leq (D_{90} - D_{10})/D_{50} \leq 1.21$$

wherein, in Equation 1,

$D_{10}$ denotes a particle size at which a cumulative volume of 10% is reached, $D_{50}$ denotes a particle size at which a cumulative volume of 50% is reached, and $D_{90}$ denotes a particle size at which a cumulative volume of 90% is reached, as obtained from a cumulative volume-based particle size distribution curve measured by laser diffraction particle size analysis.

A particle size distribution of the lithium transition metal oxide included in the positive electrode active material satisfies Equation 2 below:

$$[\text{Equation 2}]$$

$$1.05 \leq (D_{max} - D_{50})/(D_{50} - D_{min}) \leq 2.35$$

wherein, in Equation 2,

$D_{50}$ denotes a particle size at which a cumulative volume of 50% is reached, $D_{min}$ denotes a minimum particle size, and $D_{max}$ denotes a maximum particle size, as obtained from a cumulative volume-based particle size distribution curve measured by laser diffraction particle size analysis.

A content of fine particles having a particle size of 1 $\mu$m or less in the positive electrode active material is 1 vol% or more and 10 vol% or less.

In another aspect of the present invention, there is provided a positive electrode comprising the above-described positive electrode active material.

In still another aspect of the present invention, there is provided a lithium secondary battery comprising the above-described positive electrode.

According to the present invention, the lifetime characteristics and stability of a lithium secondary battery employing the positive electrode active material defined herein can be improved by reducing the number of unit particles constituting a Mid-Ni type lithium transition metal oxide having a relatively low nickel content (for example, about 70 mol% or less or about 65 mol% or less).

In addition, according to the present invention, the operational characteristics at high voltage can be improved by controlling the content of fine powder in the positive electrode active material through a pulverization process and adjusting the particle size distribution of the lithium transition metal oxide included in the positive electrode active material.

In addition to the above effects, the specific effects of the present invention will be described in conjunction with detailed embodiments for carrying out the invention below.

BRIEF DESCRIPTION OF THE DRAWINGS

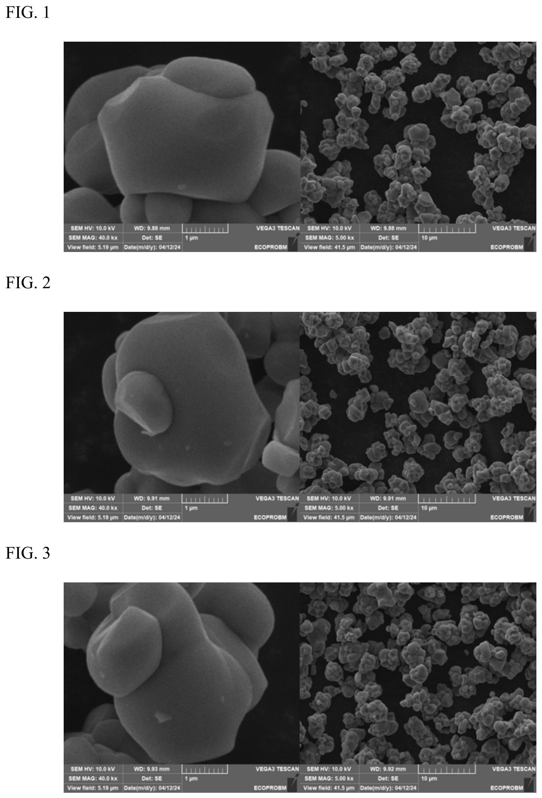

FIG. 1 shows SEM images (high magnification and low magnification) of the positive electrode active material according to Example 1.

FIG. 2 shows SEM images (high magnification and low magnification) of the positive electrode active material according to Example 2.

FIG. 3 shows SEM images (high magnification and low magnification) of the positive electrode active material according to Example 3.

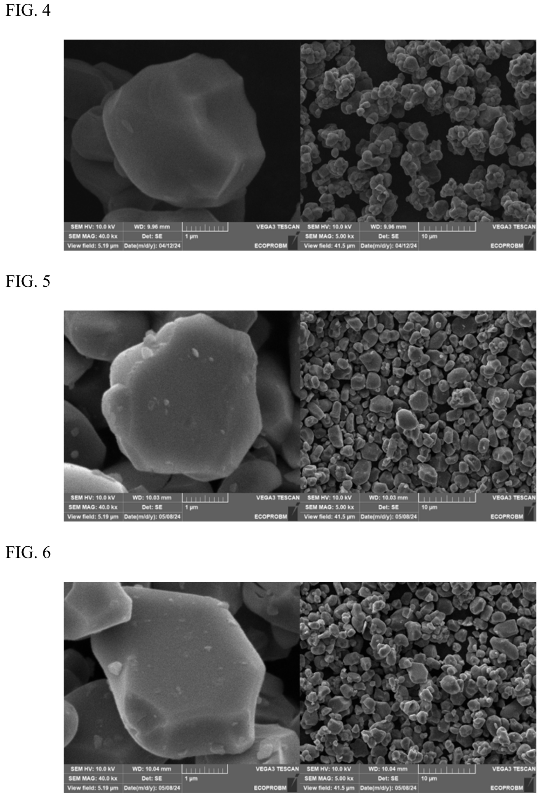

FIG. 4 shows SEM images (high magnification and low magnification) of the positive electrode active material according to Example 4.

FIG. 5 shows SEM images (high magnification and low magnification) of the positive electrode active material according to Example 5.

FIG. 6 shows SEM images (high magnification and low magnification) of the positive electrode active material according to Example 6.

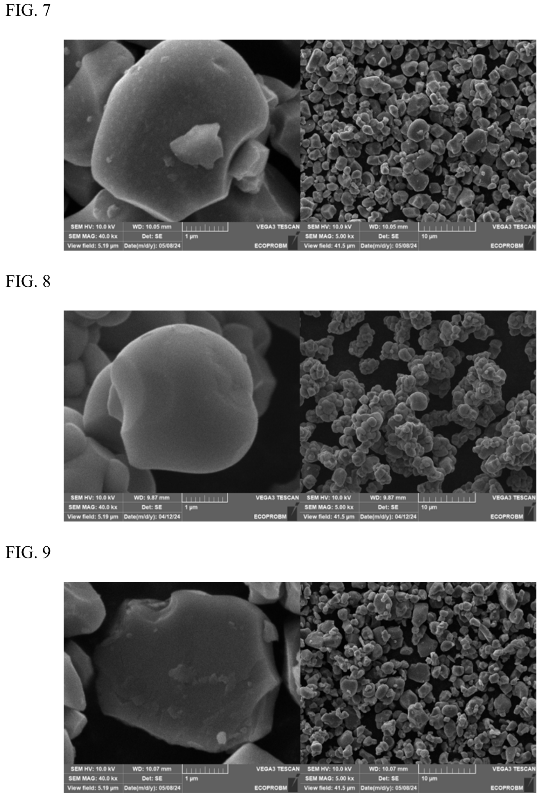

FIG. 7 shows SEM images (high magnification and low magnification) of the positive electrode active material according to Example 7.

FIG. 8 shows SEM images (high magnification and low magnification) of the positive electrode active material according to Comparative Example 1.

FIG. 9 shows SEM images (high magnification and low magnification) of the positive electrode active material according to Comparative Example 2.

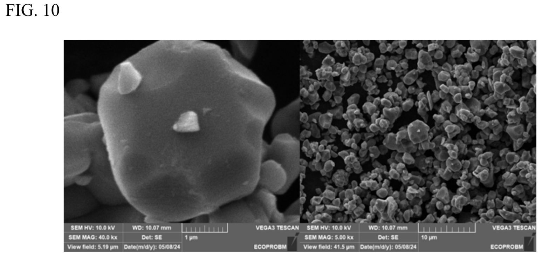

FIG. 10 shows SEM images (high magnification and low magnification) of the positive electrode active material according to Comparative Example 3.

DETAILED DESCRIPTION OF EXEMPLARY EMBODIMENTS

To better understand the present invention, certain terms are defined herein for convenience. Unless otherwise defined herein, scientific and technical terms used herein will have meanings generally understood by those of ordinary skill in the art. In addition, unless the context clearly indicates otherwise, it should be understood that a term in the singular form also includes its plural form, and a term in the plural form also includes its singular form.

Positive electrode active material

A positive electrode active material according to one aspect of the present invention comprises a lithium transition metal oxide capable of reversible intercalation/deintercalation of lithium ions.

The lithium transition metal oxide is a composite metal oxide capable of intercalation/deintercalation of lithium ions, and has a layered crystal structure belonging to the R-3m space group. The lithium transition metal oxide having a layered crystal structure exhibits a characteristic peak in a region of 2θ of 18° to 20° in a diffraction pattern obtained from XRD analysis.

The lithium transition metal oxide comprises at least lithium and a transition metal. The transition metal may include at least one, at least two, or all of nickel, cobalt, and manganese.

Preferably, the lithium transition metal oxide may be a lithium nickel-based composite oxide containing nickel. In addition, the lithium transition metal oxide may be a lithium nickel-based composite oxide containing nickel and cobalt.

In order to improve low rate characteristics and lifespan characteristics while maintaining the high reversible capacity of $LiNiO_2$, the lithium nickel-based composite oxide may be a ternary lithium transition metal oxide such as NCM (Ni-Co-Mn) or NCA (Ni-Co-Al), in which a portion of nickel is substituted with cobalt, manganese, and/or aluminum, or a quaternary lithium transition metal oxide such as NCMA (Ni-Co-Mn-Al). The ternary or quaternary lithium transition metal oxide may further comprise dopants other than nickel, cobalt, manganese, and aluminum.

The lithium transition metal oxide may be a cobalt-free type lithium transition metal oxide in which the bulk particle does not contain cobalt. The cobalt-free type lithium transition metal oxide may further comprise dopants other than nickel, cobalt, and manganese.

The lithium transition metal oxide defined herein is a Mid-Ni type lithium transition metal oxide having a relatively low nickel content. Herein, a lithium transition metal oxide having a nickel content among the transition metal of 70 mol% or less is referred to as a Mid-Ni type lithium transition metal oxide, and a lithium transition metal oxide having a nickel content among the transition metal of more than 70 mol% is defined as a high-Ni type lithium transition metal oxide.

The content of nickel among the transition metal (the content of nickel relative to all elements other than lithium in the lithium transition metal oxide) may be 40 mol% or more and 70 mol% or less, 45 mol% or more and 70 mol% or less, 50 mol% or more and 70 mol% or less, 55 mol% or more and 65 mol% or less, or 60 mol% or more and 65 mol% or less.

If the content of nickel in the lithium transition metal oxide exceeds 70 mol%, cation mixing in the crystal structure may increase, thereby reducing stability, or the content of unreacted lithium impurities such as LiOH and $Li_2CO_3$ on the surface may increase. On the other hand, when the content of nickel in the lithium transition metal oxide is less than 40 mol%, excess amounts of other transition metals (for example, manganese, etc.) other than nickel may cause phase separation, resulting in impurity phases belonging to space groups other than the R-3m space group. The impurity phases may directly affect the deterioration of the electrochemical characteristics of the positive electrode active material.

The content of cobalt among the transition metal may be 10 mol% or less, 2.5 mol% or more and 10 mol% or less, or 5 mol% or more and 10 mol% or less.

If the content of cobalt in the lithium transition metal oxide exceeds 10 mol%, the goal of cost reduction of the positive electrode active material cannot be achieved. In addition, if the content of cobalt in the lithium transition metal oxide becomes excessively high, the operating voltage of a lithium secondary battery using the positive electrode active material may decrease, making it difficult to exhibit high output characteristics at relatively high voltages. Furthermore, if the content of cobalt in the lithium transition metal oxide becomes excessively high, the stability may be degraded due to an increase in the amount of gas generated in the lithium secondary battery using the positive electrode active material.

The lithium transition metal oxide may be a cobalt-free type lithium transition metal oxide that does not contain cobalt in the bulk particles. However, it is preferably contained in an amount of 2.5 mol% or more to facilitate the formation of a layered crystal structure belonging to the R-3m space group.

The content of manganese among the transition metal may be 20 mol% or more and 50 mol% or less, 20 mol% or more and 45 mol% or less, 20 mol% or more and 40 mol% or less, 25 mol% or more and 35 mol% or less, or 27 mol% or more and 33 mol% or less.

If the content of manganese in the lithium transition metal oxide exceeds 50 mol%, it may be difficult to form lithium transition metal oxides in the form of single particles and quasi-single particles, and excess manganese in the lithium transition metal oxide may cause phase separation, resulting in impurity phases belonging to space groups other than the R-3m space group. The impurity phases may directly affect the deterioration of the electrochemical characteristics of the positive electrode active material.

On the other hand, when the content of manganese in the lithium transition metal oxide is less than 20 mol%, the stability of the lithium transition metal oxide having a relatively low nickel content (for example, about 70 mol% or less, or about 65 mol% or less) as defined herein may decrease, and the operating voltage of a lithium secondary battery using the positive electrode active material may decrease, making it difficult to exhibit high output characteristics at relatively high voltages.

The lithium transition metal oxide may have a composition represented by Chemical Formula 1 below,

[Chemical Formula 1] $\quad\quad Li_aNi_{1-(b+c+d)}Co_bMn_cM1_dO_2$

wherein, in Chemical Formula 1,

M1 is at least one selected from Na, K, Mg, Ca, Sr, Ba, Rb, B, Ce, Hf, Ta, Cr, F, Al, V, Ti, Fe, Zr, Zn, Si, Y, Nb, Ga, Sn, Mo, W, P, Ge, Nd, Gd, and Cu, and

$0.95 \leq a \leq 1.15$, $0 \leq b \leq 0.10$, $0.20 \leq c \leq 0.50$, $0 \leq d \leq 0.10$, and $0.4 \leq 1 - (b + c + d) \leq 0.7$.

In Chemical Formula 1, "a", representing the ratio of lithium to all elements other than lithium in the lithium transition metal oxide, may be 0.95 or more and 1.15 or less, 0.95 or more and 1.10 or less, 0.98 or more and 1.10 or less, or 1.01 or more and 1.07 or less.

When "a" in Chemical Formula 1 is less than 0.95, the capacity of the positive electrode active material containing the lithium transition metal oxide represented by Chemical Formula 1 may decrease. In contrast, when "a" in Chemical Formula 1 is greater than 1.15, phase separation may occur due to excess lithium and manganese present in the lithium transition metal oxide, resulting in impurity phases belonging to space groups other than the R-3m space group.

In Chemical Formula 1, "1-(b+c+d)", representing the ratio of nickel to all elements other than lithium in the lithium transition metal oxide, may be 0.40 or more and 0.70 or less, 0.45 or more and 0.70 or less, 0.50 or more and 0.70 or less, 0.55 or more and 0.65 or less, or 0.60 or more and 0.65 or less.

In Chemical Formula 1, "b", representing the ratio of cobalt to all elements other than lithium in the lithium transition metal oxide, may be 0 or more and 0.10 or less, 0.025 or more and 0.10 or less, or 0.05 or more and 0.10 or less.

In Chemical Formula 1, "c", representing the ratio of manganese to all elements other than lithium in the lithium transition metal oxide, may be 0.20 or more and 0.50 or less, 0.20 or more and 0.45 or less, 0.20 or more and 0.40 or less, 0.25 or more and 0.35 or less, or 0.27 or more and 0.33 or less.

When the lithium transition metal oxide contains a dopant, "d" in Chemical Formula 1 is greater than 0. In addition, when the lithium transition metal oxide contains a dopant, the molar fraction "d", representing the ratio of the dopant to the total metallic elements other than lithium in the lithium transition metal oxide, may be 0.10 or less, 0.05 or less, 0.04 or less, 0.03 or less, 0.02 or less, or 0.01 or less.

When the lithium transition metal oxide selectively contains a dopant, the dopant may include at least one element selected from Na, K, Mg, Ca, Sr, Ba, Rb, B, Ce, Hf, Ta, Cr, F, Al, V, Ti, Fe, Zr, Zn, Si, Y, Nb, Ga, Sn, Mo, W, P, Ge, Nd, Gd, and Cu; preferably at least one element selected from Mg, Ca, Al, Ti, Zr, Mo, W, and P; and more preferably at least one element selected from Ca, Al, Ti, and Zr. The type and combination of the dopant may be appropriately selected within a range that does not adversely affect the electrochemical properties and stability of the positive electrode active material.

The upper and lower limits of the contents of nickel, cobalt, manganese, and the dopant defined in Chemical Formula 1 may be appropriately selected within the ranges satisfying the above definitions.

As described above, the lithium transition metal oxide further comprises cobalt and manganese as transition metals, and the content of manganese in the lithium transition metal oxide may be greater than the content of cobalt. However, in a conventional Mid-Ni type lithium transition metal oxide, as the content of manganese becomes higher than that of cobalt, kinetic characteristics such as lithium-ion conductivity may decrease, resulting in a tendency for rate characteristics to deteriorate.

Accordingly, herein, in order to improve the efficiency of reversible intercalation/deintercalation of lithium ions by the lithium transition metal oxide and thereby enhance rate capability, the lithium transition metal oxide is characterized by having a small number of unit particles.

Specifically, the lithium transition metal oxide may have at least one form selected from a form of a single particle consisting of a single unit particle and a form of a quasi-single particle in which 30 or less unit particles are aggregated. The term "unit particle" is defined as being equivalent to "primary particle."

The single unit particle may have a rod shape, an elliptical shape, and/or an irregular shape. In addition, unless specifically intended during the manufacturing process, variously shaped unit particles may exist within the same positive electrode active material. The term "unit particle" refers to a particle unit in which no apparent grain boundary is observed when observed under a scanning electron microscope (SEM) at a magnification of 5,000× to 20,000×.

That is, the single particle form consisting of one unit particle means that the lithium transition metal oxide is composed of only one unit particle, rather than a secondary particle in which a plurality of unit particles are aggregated. The average particle diameter (D50) of the lithium transition metal oxide present in the single particle form may be in the range of 1.0 $\mu$m to 8.0 $\mu$m, 1.0 $\mu$m to 7.0 $\mu$m, 1.0 $\mu$m to 6.0 $\mu$m, 1.0 $\mu$m to 5.0 $\mu$m, 2.0 $\mu$m to 8.0 $\mu$m, 2.0 $\mu$m to 7.0 $\mu$m, 2.0 $\mu$m to 6.0 $\mu$m, or 2.0 $\mu$m to 5.0 $\mu$m.

The average particle diameter ($D_{50}$) of the unit particle may be an average value of the length in the major axis direction and the length in the minor axis direction of the unit particle ([length of major axis + length of minor axis]/2). The average particle diameter of the unit particle may be calculated as an average value of the particle diameters of all unit particles observed from a surface SEM image and/or a cross-sectional SEM image of the lithium transition metal oxide.

When the average particle diameter of the unit particle is less than 1.0 $\mu$m, the lithium transition metal oxide is likely to have a polycrystalline structure in which 50 or more, or even 100 or more, unit particles are aggregated, rather than having a single particle form and/or a quasi-single particle form.

In addition, when the average particle diameter of the unit particle is less than 1.0 $\mu$m, the positive electrode active material comprising a lithium transition metal oxide having at least one form selected from a single particle form consisting of one unit particle and a quasi-single particle form in which 30 or fewer unit particles are aggregated may have an increased specific surface area, which may cause a decrease in stability due to side reactions with the electrolyte.

Conversely, when the average particle diameter of the unit particle exceeds 8.0 $\mu$m, the growth of the unit particle may be excessively induced, which may reduce the diffusivity of lithium ions mediated by the unit particles. In addition, due to the characteristics of the Mid-Ni type lithium transition metal oxide having a relatively high content of transition metals other than nickel, the distribution of transition metals within the unit particle may become non-uniform.

In general, ternary or quaternary type lithium transition metal oxides have a secondary particle form in which hundreds or thousands of unit particles are aggregated. The lithium transition metal oxide defined herein may have a secondary particle form in which a plurality of unit particles are aggregated; however, it has a quasi-single particle form in which 30 or fewer, 20 or fewer, or 10 or fewer unit particles are aggregated. Hereinafter, in order to distinguish from the secondary particles in which hundreds or thousands of unit particles are aggregated, a secondary particle in which 30 or fewer, 20 or fewer, or 10 or fewer unit particles are aggregated may be referred to as a "quasi-single particle". In addition, the primary particles constituting the conventional ternary or quaternary type lithium transition metal oxide having a secondary particle form have a smaller particle diameter than the unit particles defined herein.

The average particle diameter ($D_{50}$) of the lithium transition metal oxide present in the quasi-single particle form may be 3.0 $\mu$m or more and 12.0 $\mu$m or less, or 4.0 $\mu$m or more and 12.0 $\mu$m or less. The average particle diameter ($D_{50}$) of the lithium transition metal oxide present in the quasi-single particle form may vary depending on the number and size of the unit particles constituting the quasi-single particle.

The average particle diameter ($D_{50}$) of the lithium transition metal oxide present in the form of the quasi-single particle form may be 3.0 μm or more and 12.0 μm or less, or 4.0 μm or more and 12.0 μm or less. The average particle diameter ($D_{50}$) of the lithium transition metal oxide present in the form of the quasi-single particle form may vary depending on the number and size of unit particles constituting the quasi-single particle.

In addition, each unit particle constituting the quasi-single particle may have a size comparable to that of the lithium transition metal oxide present in the form of a single particle. That is, the average particle diameter ($D_{50}$) of the unit particles constituting the quasi-single particle may be 1.0 μm to 8.0 μm, 1.0 μm to 7.0 μm, 1.0 μm to 6.0 μm, 1.0 μm to 5.0 μm, 2.0 μm to 8.0 μm, 2.0 μm to 7.0 μm, 2.0 μm to 6.0 μm, or 2.0 μm to 5.0 μm.

The average particle diameter ($D_{50}$) of the lithium transition metal oxide present in the form of a quasi-single particle may be calculated as the average value of the particle diameters of the quasi-single particles observed in SEM images.

Herein, the term "particle size" is defined as being synonymously with "particle diameter" or "particle size" and, unless otherwise defined, all "average particle sizes" refer to the particle size corresponding to 50% of the cumulative volume determined by the above-described laser diffraction method.

A particle size distribution of the lithium transition metal oxide in the positive electrode active material may be measured using a laser diffraction method. For example, after dispersing secondary particles in a dispersion medium, a commercially available laser diffraction particle size analyzer (for example, Microtrac MT 3000) may be used to obtain a cumulative volume-based particle size distribution curve by irradiating ultrasonic waves at about 28 kHz with an output of 60 W. From the cumulative volume-based particle size distribution curve, particle sizes corresponding to 10%, 50%, and 90% cumulative volumes ($D_{10}$, $D_{50}$, and $D_{90}$), a minimum particle size ($D_{min}$), and a maximum particle size ($D_{max}$) may then be calculated.

The positive electrode active material may include both a single particle form lithium transition metal oxide and a quasi-single particle form lithium transition metal oxide.

For the positive electrode active material including the single particle form lithium transition metal oxide and the quasi-single particle form lithium transition metal oxide, the $D_{50}$ measured by the laser diffraction method may be in the range of 1.0 μm to 12.0 μm, 1.0 μm to 10.0 μm, 1.0 μm to 8.0 μm, 1.0 μm to 7.0 μm, 2.0 μm to 8.0 μm, 2.0 μm to 7.0 μm, 2.0 μm to 6.0 μm, 2.5 μm to 5.5 μm, or 2.7 μm to 5.4 μm. The positive electrode active material comprising a Mid-Ni type lithium transition metal oxide having a nickel content among the transition metals of 40 mol% or more and 70 mol% or less may exhibit an optimal energy density per unit volume within the above $D_{50}$ range.

For the positive electrode active material including the single particle form lithium transition metal oxide and the quasi-single particle form lithium transition metal oxide, the $D_{10}$ measured by the laser diffraction method may be 0.3 μm or more and 8.0 μm or less, in the range of 0.5 μm to 6.0 μm, 1.0 μm to 5.0 μm, 1.0 μm to 4.0 μm, or 1.0 μm to 3.5 μm.

When the $D_{10}$ measured by the laser diffraction method for the positive electrode active material is less than 0.3 μm, the content of fine particles having a particle size of 1 μm or less in the positive electrode active material may increase. In addition, as the particle size distribution of the lithium transition metal oxide shifts overall toward $D_{min}$, particle aggregation may increase, resulting in a decrease in energy density per unit volume.

For the positive electrode active material including the single particle form lithium transition metal oxide and the quasi-single particle form lithium transition metal oxide, the $D_{90}$ measured by the laser diffraction method may be 1.0 μm or more and 15.0 μm or less, in the range of 2.0 μm to 12.0 μm, 3.0 μm to 12.0 μm, 4.0 μm to 10.0 μm, or 4.2 μm to 9.5 μm. The positive electrode active material comprising a Mid-Ni type lithium transition metal oxide having a nickel content among the transition metals of 40 mol% or more and 70 mol% or less may exhibit an optimal energy density per unit volume within the above $D_{90}$ range.

The upper and lower limits of $D_{10}$, $D_{50}$, and $D_{90}$ defined above may be appropriately selected within a range satisfying the following relational expression.

A particle size distribution of the lithium transition metal oxide included in the positive electrode active material may satisfy Equation 1 below.

[Equation 1]

$$0.85 \leq (D_{90} - D_{10})/D_{50} \leq 1.21$$

wherein, in Equation 1,

$D_{10}$ denotes a particle size at which a cumulative volume of 10% is reached, $D_{50}$ denotes a particle size at which a cumulative volume of 50% is reached, and $D_{90}$ denotes a particle size at which a cumulative volume of 90% is reached, as obtained from a cumulative volume-based particle size distribution curve measured by laser diffraction particle size analysis.

When the value of $(D_{90} - D_{10})/D_{50}$ in Equation 1 is greater than 1.21, the particle size distribution peak of the lithium transition metal oxide included in the positive electrode active material represents a particle size distribution in which the peak observed in the cumulative volume-based particle size distribution curve is shifted toward $D_{max}$, which corresponds to the maximum particle size. In contrast, when the value of $(D_{90} - D_{10})/D_{50}$ in Equation 1 is less than 0.85, the peak of the particle size distribution observed in the cumulative volume-based particle size distribution curve becomes closer to $D_{min}$, which corresponds to the minimum particle size.

The positive electrode active material comprising a Mid-Ni type lithium transition metal oxide having a nickel content among the transition metals of 40 mol% or more and 70 mol% or less may exhibit an optimal energy density per unit volume when the value of $(D_{90} - D_{10})/D_{50}$ in Equation 1 is in the range of 0.85 to 1.21.

In addition, the particle size distribution of the lithium transition metal oxide included in the positive electrode active material may satisfy Equation 2 below.

[Equation 2]

$$1.05 \leq (D_{max} - D_{50})/(D_{50} - D_{min}) \leq 2.35$$

wherein, in Equation 2,
$D_{50}$ denotes a particle size at which a cumulative volume of 50% is reached, $D_{min}$ denotes a minimum particle size, and $D_{max}$ denotes a maximum particle size, as obtained from a cumulative volume-based particle size distribution curve measured by laser diffraction particle size analysis.

The value of $(D_{max} - D_{50})/(D_{50} - D_{min})$ represents the degree of sharpness of the particle size distribution peak observed in the cumulative volume-based particle size distribution curve. When $(D_{max} - D_{50})/(D_{50} - D_{min})$ is less than 1.05, it indicates that the sharpness of the particle size distribution peak observed in the cumulative volume-based particle size distribution curve is excessively high. In contrast, when $(D_{max} - D_{50})/(D_{50} - D_{min})$ is greater than 2.35, it indicates that the uniformity of the particle size distribution and the sharpness of the particle size distribution peak observed in the cumulative volume-based particle size distribution curve are low. When the uniformity and sharpness of the particle size distribution are excessively high or low, there is a concern that the energy density per unit volume may decrease.

The positive electrode active material comprising a Mid-Ni type lithium transition metal oxide having a nickel content among the transition metals of 40 mol% or more and 70 mol% or less may exhibit improved lifetime characteristics and stability, as well as enhanced operational characteristics at high voltage, when the particle size distribution satisfies Equations 1 and 2.

In addition, in order to improve the uniformity of the particle size distribution of the lithium transition metal oxide included in the positive electrode active material, it is preferable that $D_{max} - D_{90}$ observed in the cumulative volume-based particle size distribution curve be 0.5 μm or more and 7.5 μm or less, 1.0 μm or more and 7.0 μm or less, or 1.5 μm or more and 6.0 μm or less.

When $D_{max} - D_{90}$ is less than 0.5 μm, the peak of the particle size distribution observed in the cumulative volume-based particle size distribution curve represents a particle size distribution shifted toward $D_{max}$, which corresponds to the maximum particle size. In this case, a positive electrode active material comprising a Mid-Ni type lithium transition metal oxide having a nickel content among the transition metals of 40 mol% or more and 70 mol% or less may have difficulty exhibiting an optimal energy density per unit volume.

In contrast, when $D_{max} - D_{90}$ is greater than 7.5 μm, the peak of the particle size distribution observed in the cumulative volume-based particle size distribution curve may become closer to $D_{min}$, which corresponds to the minimum particle size, or the uniformity of the particle size distribution of the lithium transition metal oxide included in the positive electrode active material may deteriorate.

In order to improve the sharpness of the particle size distribution of the lithium transition metal oxide included in the positive electrode active material, it is preferable that $D_{max} - D_{50}$ observed in the cumulative volume-based particle size distribution curve be 2.0 μm or more and 10.0 μm or less, 2.5 μm or more and 10.0 μm or less, or 3.0 μm or more and 10.0 μm or less.

When $D_{max} - D_{50}$ is less than 2.0 μm, the peak of the particle size distribution observed in the cumulative volume-based particle size distribution curve represents a particle size distribution shifted toward $D_{max}$, which corresponds to the maximum particle size. In this case, a positive electrode active material comprising a Mid-Ni type lithium transition metal oxide having a nickel content among the transition metals of 40 mol% or more and 70 mol% or less may fail to exhibit an optimal energy density per unit volume.

In contrast, when $D_{max} - D_{50}$ is greater than 10.0 μm, the peak of the particle size distribution observed in the cumulative volume-based particle size distribution curve may become closer to $D_{min}$, which corresponds to the minimum particle size, or the uniformity or sharpness of the particle size distribution of the lithium transition metal oxide included in the positive electrode active material may deteriorate.

It is preferable that $D_{max}$ observed in the cumulative volume-based particle size distribution curve of the lithium transition metal oxide included in the positive electrode active material be 15 $\mu$m or less.

When the maximum particle size of the lithium transition metal oxide obtained from the cumulative volume-based particle size distribution curve of the positive electrode active material exceeds 15 $\mu$m, it indicates that the growth of the unit particles constituting the lithium transition metal oxide has been excessively induced. When the growth of the unit particles is excessively induced, polarization may occur due to a decrease in lithium-ion diffusivity mediated by the unit particles, and the likelihood of cracks occurring within the unit particles due to the polarization phenomenon increases.

In addition, when the maximum particle size of the lithium transition metal oxide exceeds 15 $\mu$m, the uniformity and sharpness of the particle size distribution observed in the cumulative volume-based particle size distribution curve may decrease, leading to a reduction in energy density per unit volume.

It is preferable that the content of fine particles having a particle size of 1 $\mu$m or less in the positive electrode active material be 1 vol% or more and 10 vol% or less, or 1.5 vol% or more and 10 vol% or less. The fine particles may be lithium transition metal oxides having a particle size of 1 $\mu$m or less. Such fine particles may be generated as the lithium transition metal oxide included in the positive electrode active material is adjusted to have the above-described particle size distribution through a pulverization process.

In general, fine particles separated from the main particle size distribution peak obtained from the cumulative volume-based particle size distribution curve of the positive electrode active material are known to reduce the energy density per unit volume of the positive electrode active material, and therefore, it is generally preferred that the positive electrode active material does not contain fine powder. However, in the case of a positive electrode active material comprising a Mid-Ni type lithium transition metal oxide having a nickel content among the transition metals of 40 mol% or more and 70 mol% or less as defined herein, when fine particles are included in a predetermined content (for example, 1 vol% or more), electrochemical properties such as lifetime characteristics may rather be improved. However, when the content of fine particles having a particle size of 1 $\mu$m or less in the positive electrode active material exceeds 10 vol%, the capacity characteristics and lifetime characteristics of the positive electrode active material may deteriorate.

Similarly to the particle size distribution of the lithium transition metal oxide in the positive electrode active material, the content of fine particles having a particle size of 1 $\mu$m or less in the positive electrode active material may be measured using a laser diffraction method. For example, after dispersing secondary particles in a dispersion medium, a commercially available laser diffraction particle size analyzer (for example, Microtrac MT 3000) may be used to obtain a cumulative volume-based particle size distribution curve by irradiating ultrasonic waves at about 28 kHz with an output of 60 W. Then, the volume-based content of fine particles having a particle size of 1 $\mu$m or less in the positive electrode active material may be measured based on the cumulative volume of particles having a particle size of 1 $\mu$m or less.

It is preferable that the average crystallite size of the lithium transition metal oxide defined herein be in the range of 145 nm to 185 nm. The average crystallite size may be quantitatively analyzed through X-ray diffraction (XRD) analysis using Cu-K$\alpha$ radiation for the lithium transition metal oxide. Specifically, the average crystallite size may be calculated through Rietveld refinement of the X-ray diffraction pattern in the $2\theta$ range of 10° to 120° obtained from XRD analysis of the positive electrode active material comprising the lithium transition metal oxide.

A positive electrode active material comprising a Mid-Ni type lithium transition metal oxide having a nickel content among the transition metals of 40 mol% or more and 70 mol% or less may exhibit an improved discharge capacity ratio when it satisfies the particle size distributions according to Equations 1 and 2 and has the above-described average crystallite size.

Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the positive electrode active material is the same as described above, for convenience, a detailed explanation will be omitted, and only the components that have not been described will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 $\mu$m to 500 $\mu$m, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material may be included in an amount of 80 wt% to 99 wt%, specifically 85 wt% to 98.5 wt%, with respect to the total weight of the positive electrode active material layer. When the positive electrode active material is included in this content range, excellent capacity characteristics may be exhibited, but the present invention is not necessarily limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte. Since the positive electrode is the same as described above, detailed description of the positive electrode will be omitted for convenience, and other components which have not been described above will be described in detail below.

The lithium secondary battery may further optionally include a battery case accommodating an electrode assembly of the positive electrode, the negative electrode and the separator, and a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 $\mu$m to 500 $\mu$m, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as $SiO_\beta$ (0<$\beta$<2), $SnO_2$, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode active material layer.

The binder is a component that assists in the bonding between a conductive material, an active material, and a current collector, and may typically be added in an amount of 0.1 wt% to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker consisting of zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used as a separator in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/-butene copolymer, an ethylene/hexene copolymer, and an ethylene/methacrylate copolymer, or a stacked structure including two or more layers thereof may be used. In addition, a conventional porous non-woven fabric, such as a non-woven fabric made of high melting point glass fiber or polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic $C_2$ to $C_{20}$ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include $Li_2S-P_2S_5$, $Li_2S-P_2S_5-LiX$ (where X is a halogen element such as I or Cl), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (where m and n are integers, and Z is Ge, Zn, or Ga), $Li_2S-GeS_2$, $Li_2S-SiS_2-Li_3PO_4$, and $Li_2S-SiS_2-Li_pMO_q$ (where p and q are integers, and M is P, Si, Ge, B, Al, Ga, or In).

The solid electrolyte, preferably, the sulfide-based solid electrolyte, may be amorphous, crystalline, or in a state in which an amorphous phase and crystalline phase are mixed.

Materials for the oxide-based solid electrolyte include $Li_7La_3Zr_2O_{12}$, $Li_{7-x}La_3Zr_{1-x}Nb_xO_{12}$, $Li_{7-3x}La_3Zr_2Al_xO_{12}$, $Li_{3x}La_{2/3-x}TiO_3$, $Li_{1+x}Al_xTi_{2-x}(PO_4)_3$, $Li_{1+x}Al_xGe_{2-x}(PO_4)_3$, $Li_3PO_4$, $Li_{3+x}PO_{4-x}N_x$ (LiPON), and $Li_{2+2x}Zn_{1-x}GeO_4$ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present invention, there is provided a battery module including the lithium secondary battery as a unit cell and/or a battery pack including the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the present invention will be described in more detail through examples. However, these examples are only for the purpose of illustrating the present invention and should not be construed as limiting the scope of the present invention.

Preparation Example 1. Preparation of positive electrode active material

Example 1

A hydroxide precursor of $Ni_{0.62}Co_{0.06}Mn_{0.32}(OH)_2$ synthesized by a co-precipitation reaction was mixed with LiOH (Li/(Ni+Co+Mn) molar ratio = 1.03), and the mixture was heat-treated in an air atmosphere at 950 °C for 10 hours to obtain a primary intermediate product (lithium transition metal oxide).

Subsequently, the primary intermediate product was pulverized using a jet mill under conditions of 2 bar and 4,000 rpm to obtain a final product.

Example 2

A positive electrode active material was prepared in the same manner as in Example 1 except that the primary intermediate product was pulverized using a jet mill under conditions of 2 bar and 6,800 rpm.

Example 3

A positive electrode active material was prepared in the same manner as in Example 1 except that the primary intermediate product was pulverized using a jet mill under conditions of 2 bar and 9,000 rpm.

Example 4

A positive electrode active material was prepared in the same manner as in Example 1 except that the primary intermediate product was pulverized using a jet mill under conditions of 2 bar and 12,000 rpm.

Comparative Example 1

A positive electrode active material was prepared in the same manner as in Example 1 except that the lithium transition metal oxide was pulverized by a hand-mixing method using a 3 L mixer instead of using a jet mill.

Comparative Example 2

A positive electrode active material was prepared in the same manner as in Example 1 except that the primary intermediate product was pulverized using a jet mill under conditions of 1.5 bar and 7,500 rpm.

Example 5

A hydroxide precursor of $Ni_{0.62}Co_{0.06}Mn_{0.32}(OH)_2$ synthesized by a co-precipitation reaction was mixed with LiOH (Li/(Ni+Co+Mn) molar ratio = 1.03), and the mixture was heat-treated in an air atmosphere at 950 °C for 10 hours to obtain a primary intermediate product (lithium transition metal oxide).

Subsequently, the primary intermediate product was mixed with $H_3BO_3$ (weighed such that the boron content was 0.17 mol% based on the total transition metal content in the primary intermediate product), and the mixture was heat-treated in an $O_2$ atmosphere at 350 °C for 5 hours to obtain a secondary intermediate product.

Thereafter, the secondary intermediate product was pulverized using a jet mill under conditions of 3 bar and 7,000 rpm to obtain a final product.

Example 6

A positive electrode active material was prepared in the same manner as in Example 5 except that the secondary intermediate product was pulverized using a jet mill under conditions of 3 bar and 9,000 rpm.

Example 7

A positive electrode active material was prepared in the same manner as in Example 5 except that the secondary intermediate product was pulverized using a jet mill under conditions of 3 bar and 11,000 rpm.

Example 8

A positive electrode active material was prepared in the same manner as in Example 5 except that the secondary intermediate product was pulverized using a jet mill under conditions of 3 bar and 10,000 rpm.

Comparative Example 3

A positive electrode active material was prepared in the same manner as in Example 5 except that the secondary intermediate product was pulverized using a jet mill under conditions of 3 bar and 18,000 rpm.

Comparative Example 4

A positive electrode active material was prepared in the same manner as in Example 5 except that the secondary intermediate product was pulverized using a jet mill under conditions of 3 bar and 20,000 rpm.

Preparation Example 2. Manufacture of lithium secondary battery (half-cell)

A positive electrode slurry was prepared by dispersing 94 wt% of each positive electrode active material prepared according to Preparation Example 1, 3 wt% of carbon black, and 3 wt% of PVDF binder in 30 g of N-methyl-2-pyrrolidone (NMP). The positive electrode slurry was uniformly applied onto a 15 $\mu$m-thick aluminum thin film and vacuum dried at 135 °C to manufacture a positive electrode for a lithium secondary battery.
A half-cell was manufactured using a lithium foil as a counter electrode to the positive electrode, a porous polyethylene membrane (Celgard 2300, thickness: 25 $\mu$m) as a separator, and an electrolyte in which $LiPF_6$ was dissolved at a concentration of 1.15 M in a mixed solvent of ethylene carbonate and ethyl methyl carbonate at a volume ratio of 3:7.

Experimental Example 1. Physical Property Analysis of Positive Electrode Active Materials

(1) Particle Size Distribution Analysis

The particle size distribution of the lithium transition metal oxide included in each positive electrode active material manufactured according to Preparation Example 1 was analyzed by a known laser diffraction method. Specifically, each positive electrode active material was dispersed in a dispersion medium, and a cumulative volume-based particle size distribution curve was obtained using a laser diffraction particle size analyzer (Microtrac MT 3000) after irradiating ultrasonic waves at about 28 kHz with an output of 60 W.
Subsequently, from the cumulative volume-based particle size distribution curve, particle sizes corresponding to 10%, 50%, and 90% cumulative volumes, a minimum particle size ($D_{min}$), a maximum particle size ($D_{max}$), and the content of fine particles having a particle size of 1 $\mu$m or less (fine powder content) on a volume basis were calculated.

(2) XRD Analysis

X-ray diffraction (XRD) analysis was performed on each positive electrode active material manufactured according to Preparation Example 1 to calculate the average crystallite size of the lithium transition metal oxide included in the positive electrode active material.
The XRD analysis was carried out using a diffractometer (Bruker D8 Advance) with Cu-K$\alpha$ radiation ($\lambda$ = 1.540598 Å). The average crystallite size was calculated from a straight line obtained by plotting $\beta\cos\theta$ versus $\sin\theta$ on a coordinate plane, where $\beta$ (rad) denotes the full width at half maximum (FWHM) and $\theta$ (rad) denotes the diffraction angle, based on the diffraction spectrum obtained by XRD analysis using Cu-K$\alpha$ radiation in a 2$\theta$ range of 10° to 120°, through Rietveld refinement.
The analysis results are shown in Tables 1 and 2 below.

[Table 1]

| Classification | fine powder content (vol%) | $D_{min}$ ($\mu$m) | $D_{10}$ ($\mu$m) | $D_{50}$ ($\mu$m) | $D_{90}$ ($\mu$m) | $D_{max}$ ($\mu$m) |
|---|---|---|---|---|---|---|
| Example 1 | 1.57 | 0.87 | 3.02 | 5.40 | 9.46 | 15.0 |
| Example 2 | 2.74 | 0.76 | 2.87 | 4.84 | 7.81 | 12.0 |
| Example 3 | 3.37 | 0.77 | 2.73 | 4.44 | 6.84 | 10.0 |
| Example 4 | 3.40 | 0.76 | 2.68 | 4.21 | 6.32 | 8.0 |
| Comparative Example 1 | 0.90 | 2.01 | 3.37 | 6.48 | 11.27 | 15.0 |
| Comparative Example 2 | 12.1 | 0.54 | 2.92 | 3.82 | 5.79 | 8.0 |
| Example 5 | 4.09 | 0.42 | 2.02 | 3.96 | 6.81 | 10.0 |
| Example 6 | 4.96 | 0.27 | 1.71 | 3.20 | 5.46 | 10.0 |
| Example 7 | 9.63 | 0.07 | 1.10 | 2.71 | 4.25 | 6.0 |

(continued)

| Classification | fine powder content (vol%) | $D_{min}$ (µm) | $D_{10}$ (µm) | $D_{50}$ (µm) | $D_{90}$ (µm) | $D_{max}$ (µm) |
|---|---|---|---|---|---|---|
| Example 8 | 6.32 | 0.20 | 1.68 | 3.18 | 5.33 | 8.0 |
| Comparative Example 3 | 10.19 | 0.06 | 0.19 | 2.38 | 4.28 | 8.0 |
| Comparative Example 4 | 13.30 | 0.05 | 0.18 | 2.21 | 4.18 | 8.0 |

[Table 2]

| Classification | $(D_{90}-D_{10})/D_{50}$ | $(D_{max}-D_{50})/(D_{50}-D_{min})$ | $D_{max}-D_{90}$ | $D_{max}-D_{50}$ |
|---|---|---|---|---|
| Example 1 | 1.19 | 2.12 | 5.54 | 9.60 |
| Example 2 | 1.02 | 1.75 | 4.19 | 7.16 |
| Example 3 | 0.93 | 1.51 | 3.16 | 5.56 |
| Example 4 | 0.86 | 1.10 | 1.68 | 3.79 |
| Comparative Example 1 | 1.22 | 1.91 | 3.73 | 8.52 |
| Comparative Example 2 | 0.75 | 1.27 | 2.21 | 4.18 |
| Example 5 | 1.21 | 1.71 | 3.19 | 6.04 |
| Example 6 | 1.17 | 2.32 | 4.54 | 6.80 |
| Example 7 | 1.16 | 1.25 | 1.75 | 3.29 |
| Example 8 | 1.15 | 1.62 | 2.67 | 4.82 |
| Comparative Example 3 | 1.72 | 2.42 | 3.72 | 5.62 |
| Comparative Example 4 | 1.81 | 2.68 | 3.82 | 5.79 |

Experimental Example 2. Evaluation of electrochemical properties of lithium secondary battery (half-cell)

For the lithium secondary battery (half-cell) manufactured in Preparation Example 2, charge/discharge experiments were conducted using an electrochemical analyzer (Toyo, Toscat-3100) at 25 °C, a voltage range of 3.0 V to 4.4 V, and a discharge rate of 2.0C/0.1C, to measure the initial charge capacity, initial discharge capacity, initial efficiency, and 2.0C/0.1C rate characteristics.

In addition, for the same lithium secondary battery (half-cell), the ratio of the discharge capacity at the 50th cycle to the initial capacity (cycle capacity retention) was measured after performing 50 charge/discharge cycles under conditions of 25 °C and 45 °C, a voltage range of 3.0 V to 4.4 V, and a charge/discharge rate of 1C/1C, using the electrochemical analyzer (Toyo, Toscat-3100).

The measurement results are shown in Table 3 below.

[Table 3]

| Classification | Charge capacity (mAh/g) | Discharge capacity (mAh/g) | Initial efficiency (%) | 2.0C/0.1C Rate (%) | Roomtemperature lifetime (%) | High-temperature lifetime (%) |
|---|---|---|---|---|---|---|
| Example 1 | 215.1 | 191.3 | 88.94 | 84.10 | 90.70 | 91.10 |
| Example 2 | 215.9 | 191.6 | 88.84 | 83.70 | 91.00 | 90.90 |
| Example 3 | 215.7 | 191.3 | 88.69 | 84.00 | 91.10 | 90.70 |
| Example 4 | 215.1 | 190.9 | 88.75 | 84.20 | 91.50 | 91.40 |
| Comparative Example 1 | 215.6 | 191.0 | 88.59 | 83.60 | 90.00 | 90.10 |
| Comparative Example 2 | 215.5 | 190.9 | 88.58 | 83.80 | 89.9 | 90.20 |
| Example 5 | 216.9 | 192.3 | 88.66 | 84.10 | 91.90 | 91.70 |

| | | | | | | |
|---|---|---|---|---|---|---|
| Example 6 | 216.4 | 191.7 | 88.58 | 83.90 | 91.40 | 91.50 |
| Example 7 | 215.0 | 191.8 | 89.20 | 84.30 | 91.30 | 91.30 |
| Example 8 | 216.0 | 191.9 | 88.84 | 84.10 | 91.40 | 91.30 |
| Comparative Example 3 | 213.9 | 189.4 | 88.55 | 84.00 | 90.50 | 90.50 |
| Comparative Example 4 | 213.9 | 188.7 | 88.22 | 83.40 | 90.00 | 89.90 |

Comparing the results of Examples 1 to 4 with those of Comparative Examples 1 and 2, it can be confirmed that the lithium secondary batteries employing the positive electrode active materials according to Examples 1 to 4, in which the content of fine particles having a particle size of 1 $\mu$m or less in the positive electrode active material is 1 vol% or more and 10 vol% or less, exhibit improved lifetime characteristics at room temperature (25 °C) and high temperature (45 °C).

Similarly, comparing the results of Examples 5 to 8 with those of Comparative Examples 3 and 4, it can be confirmed that the lithium secondary batteries employing the positive electrode active materials according to Examples 5 to 8, in which the content of fine particles having a particle size of 1 $\mu$m or less in the positive electrode active material is 1 vol% or more and 10 vol% or less, exhibit improved lifetime characteristics at room temperature (25 °C) and high temperature (45 °C).

In general, it is known that fine particles separated from the main particle size distribution peak in a cumulative volume-based particle size distribution curve of the positive electrode active material may reduce the energy density per unit volume of the positive electrode active material, and thus, it is generally preferred that the positive electrode active material does not contain fine powder.

However, in the case of a positive electrode active material comprising a Mid-Ni type lithium transition metal oxide having a nickel content among the transition metals of 40 mol% or more and 70 mol% or less as defined herein, when fine particles are included in an amount equal to or greater than a predetermined content, electrochemical properties such as high-temperature lifetime characteristics may rather be improved.

In contrast, when the content of fine particles having a particle size of 1 $\mu$m or less in the positive electrode active material exceeds 10 vol%, the capacity characteristics or the lifetime characteristics at room temperature (25 °C) and high temperature (45 °C) may deteriorate.

Although embodiments of the present invention have been described above, those skilled in the art can make various modifications and changes to the present invention by adding, changing, or deleting components without departing from the spirit of the present invention as set forth in the claims, which will be included within the scope of rights of the present invention.

**Claims**

1.  A positive electrode active material comprising a lithium transition metal oxide capable of intercalation/deintercalation of lithium,

    wherein the lithium transition metal oxide comprises at least lithium and a transition metal,
    wherein a content of nickel among the transition metals is 40 mol% or more and 70 mol% or less, and
    wherein a content of fine particles having a particle size of 1 $\mu$m or less in the positive electrode active material is 1 vol% or more and 10 vol% or less.

2.  The positive electrode active material of claim 1, wherein a content of cobalt among the transition metals is 10 mol% or less.

3.  The positive electrode active material of claim 1, wherein a content of manganese among the transition metals is 20 mol% or more and 50 mol% or less.

4.  The positive electrode active material of claim 1, wherein the lithium transition metal oxide further comprises cobalt and manganese, and
    wherein a content of manganese among the transition metals is greater than a content of cobalt.

5.  The positive electrode active material of claim 1, wherein the lithium transition metal oxide is represented by Chemical Formula 1 below,

[Chemical Formula 1] $\quad\quad Li_aNi_{1-(b+c+d)}Co_bMn_cM1_dO_2$

wherein, in Chemical Formula 1,

M1 is at least one selected from Na, K, Mg, Ca, Sr, Ba, Rb, B, Ce, Hf, Ta, Cr, F, Al, V, Ti, Fe, Zr, Zn, Si, Y, Nb, Ga, Sn, Mo, W, P, Ge, Nd, Gd, and Cu, and

$0.95 \le a \le 1.15$, $0 \le b \le 0.10$, $0.20 \le c \le 0.50$, $0 \le d \le 0.10$, and $0.4 \le 1 - (b + c + d) \le 0.7$.

6. The positive electrode active material of claim 1, wherein the lithium transition metal oxide has at least one form selected from a single particle form consisting of one unit particle and a quasi-single particle form in which 30 or fewer unit particles are aggregated.

7. The positive electrode active material of claim 1, wherein an average particle diameter ($D_{50}$) of the lithium transition metal oxide present in the single particle form is 1.0 $\mu$m or more and 8.0 $\mu$m or less.

8. The positive electrode active material of claim 1, wherein an average particle diameter ($D_{50}$) of the lithium transition metal oxide present in the quasi-single particle form is 3.0 $\mu$m or more and 12.0 $\mu$m or less.

9. The positive electrode active material of claim 1, wherein an average crystallite size of the lithium transition metal oxide is in the range of 145 nm to 185 nm.

10. The positive electrode active material of claim 1, wherein a particle size distribution of the lithium transition metal oxide included in the positive electrode active material satisfies Equation 1 below:

$$0.85 \le (D_{90} - D_{10})/D_{50} \le 1.21$$

wherein, in Equation 1,

$D_{10}$ denotes a particle size at which a cumulative volume of 10% is reached, $D_{50}$ denotes a particle size at which a cumulative volume of 50% is reached, and $D_{90}$ denotes a particle size at which a cumulative volume of 90% is reached, as obtained from a cumulative volume-based particle size distribution curve measured by laser diffraction particle size analysis.

11. The positive electrode active material of claim 1, wherein a particle size distribution of the lithium transition metal oxide included in the positive electrode active material satisfies Equation 2 below:

[Equation 2]

$$1.05 \le (D_{max} - D_{50})/(D_{50} - D_{min}) \le 2.35$$

wherein, in Equation 2,

$D_{50}$ denotes a particle size at which a cumulative volume of 50% is reached, $D_{min}$ denotes a minimum particle size, and $D_{max}$ denotes a maximum particle size, as obtained from a cumulative volume-based particle size distribution curve measured by laser diffraction particle size analysis.

12. A positive electrode comprising the positive electrode active material of any one of claims 1 to 11.

13. A lithium secondary battery comprising the positive electrode of claim 12.

FIG. 1

FIG. 2

FIG. 3

FIG. 4

FIG. 5

FIG. 6

FIG. 7

FIG. 8

FIG. 9

FIG. 10

## INTERNATIONAL SEARCH REPORT

| International application No. |
|---|
| **PCT/KR2024/016269** |

**A. CLASSIFICATION OF SUBJECT MATTER**

H01M 4/525(2010.01)i; H01M 4/505(2010.01)i; H01M 4/36(2006.01)i; H01M 10/052(2010.01)i; H01M 4/02(2006.01)i

According to International Patent Classification (IPC) or to both national classification and IPC

**B. FIELDS SEARCHED**

Minimum documentation searched (classification system followed by classification symbols)

H01M 4/525(2010.01); C01G 53/00(2006.01); H01M 10/052(2010.01); H01M 4/48(2010.01); H01M 4/58(2010.01); H01M 50/131(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 단입자(single particle), 미분(fine particle), 니켈(nickel, Ni), 코발트(cobalt, Co), 망간(manganese, Mn), 입도(particle size)

**C. DOCUMENTS CONSIDERED TO BE RELEVANT**

| Category* | Citation of document, with indication, where appropriate, of the relevant passages | Relevant to claim No. |
|---|---|---|
| X | JP 2022-515872 A (CONTEMPORARY AMPEREX TECHNOLOGY CO., LIMITED) 22 February 2022 (2022-02-22) See claims 1, 3, 4, 7 and 9; and paragraphs [0019], [0022]-[0029], [0032], [0033], [0039], [0040], [0103] and [0111]. | 1-8,10,12,13 |
| Y | | 9,11 |
| Y | KR 10-2021-0080249 A (LG ENERGY SOLUTION, LTD.) 30 June 2021 (2021-06-30) See claims 1, 5, 7 and 14; and paragraphs [0040]-[0049]. | 9 |
| Y | KR 10-2023-0054266 A (LG ENERGY SOLUTION, LTD.) 24 April 2023 (2023-04-24) See claims 1-4; and paragraphs [0079], [0081], [0083], [0084], [0086] and [0088]. | 11 |
| A | KR 10-2021-0097646 A (LG ENERGY SOLUTION, LTD.) 09 August 2021 (2021-08-09) See abstract; and claims 1-12. | 1-13 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 January 2025** | **24 January 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/016269**

**C. DOCUMENTS CONSIDERED TO BE RELEVANT**

| Category* | Citation of document, with indication, where appropriate, of the relevant passages | Relevant to claim No. |
|---|---|---|
| A | KR 10-2010-0079535 A (L&F ADVANCED MATERIALS CO., LTD. et al.) 08 July 2010 (2010-07-08) See abstract; and claims 1-8. | 1-13 |

Form PCT/ISA/210 (second sheet) (July 2022)

24

## INTERNATIONAL SEARCH REPORT
### Information on patent family members

International application No.

**PCT/KR2024/016269**

| Patent document cited in search report | | | Publication date (day/month/year) | Patent family member(s) | | | Publication date (day/month/year) |
|---|---|---|---|---|---|---|---|
| JP | 2022-515872 | A | 22 February 2022 | CN | 110233259 | A | 13 September 2019 |
| | | | | CN | 110233259 | B | 09 February 2021 |
| | | | | CN | 112909238 | A | 04 June 2021 |
| | | | | CN | 112909238 | B | 22 April 2022 |
| | | | | EP | 3799165 | A1 | 31 March 2021 |
| | | | | EP | 3799165 | A4 | 20 October 2021 |
| | | | | JP | 7165271 | B2 | 02 November 2022 |
| | | | | US | 11699789 | B2 | 11 July 2023 |
| | | | | US | 2022-0077464 | A1 | 10 March 2022 |
| | | | | US | 2023-0307635 | A1 | 28 September 2023 |
| | | | | WO | 2020-135767 | A1 | 02 July 2020 |
| KR | 10-2021-0080249 | A | 30 June 2021 | CN | 114788042 | A | 22 July 2022 |
| | | | | CN | 114788042 | B | 01 March 2024 |
| | | | | EP | 4060760 | A1 | 21 September 2022 |
| | | | | EP | 4060760 | A4 | 11 January 2023 |
| | | | | JP | 2023-506034 | A | 14 February 2023 |
| | | | | JP | 7536381 | B2 | 20 August 2024 |
| | | | | US | 2023-0104184 | A1 | 06 April 2023 |
| | | | | WO | 2021-125873 | A1 | 24 June 2021 |
| KR | 10-2023-0054266 | A | 24 April 2023 | KR | 10-2701053 | B1 | 03 September 2024 |
| KR | 10-2021-0097646 | A | 09 August 2021 | CN | 114868283 | A | 05 August 2022 |
| | | | | CN | 114868283 | B | 19 July 2024 |
| | | | | EP | 4064391 | A1 | 28 September 2022 |
| | | | | EP | 4064391 | A4 | 24 May 2023 |
| | | | | EP | 4064391 | B1 | 23 October 2024 |
| | | | | JP | 2023-511032 | A | 16 March 2023 |
| | | | | JP | 7463013 | B2 | 08 April 2024 |
| | | | | KR | 10-2644823 | B1 | 08 March 2024 |
| | | | | US | 2023-0034497 | A1 | 02 February 2023 |
| | | | | WO | 2021-154035 | A1 | 05 August 2021 |
| KR | 10-2010-0079535 | A | 08 July 2010 | None | | | |

Form PCT/ISA/210 (patent family annex) (July 2022)